# EUROPEAN PATENT SPECIFICATION

(11) **EP 1 780 415 B1**
(45) Date of publication and mention of the grant of the patent: **05.08.2015**
(21) Application number: 05256593.4
(22) Date of filing: 25.10.2005
(51) Int. Cl.: F04B 53/16, F04B 1/04, B23H 9/16

(54) **A component for high-pressure fluid applications and method for its manufacture**
Bauteil für Hochdruckfluidvorrichtungen und Verfahren zu seiner Herstellung
Composant pour des applications de fluides sous hautes pressions et procédé pour sa réalisation

(43) Date of publication of application: 02.05.2007
(73) Proprietor: Delphi International Operations Luxembourg S.à r.l., 4940 Bascharage (LU)
(72) Inventor: Arnold, Jonathan, Ringwood, Hampshire BH24 3AA (GB); Buckley, Paul, Rainham, Kent ME8 9ES (GB)
(74) Representative: Neill, Andrew Peter

(56) References cited:
- EP-A- 1 179 379
- EP-A- 1 365 142
- DE-A1- 10 029 425
- DE-A1- 19 854 793
- US-A- 4 543 045
- US-B1- 6 588 405

## Description

### Technical field

This invention relates to components for high-pressure fluid applications, for example a metal housing for use in a common-rail fuel pump for a diesel engine. The invention also relates to methods of machining such components.

### Background to the invention

It is well known to form fluid flow passages in components by means of intersecting bores or 'drillings'. Most commonly, the axes of the intersecting drillings are co-planar and mutually transverse.

Unless the context demands otherwise, the noun 'drilling' in this specification is intended to encompass all cylindrical holes or bores whether or not produced by drilling. This includes, for example, the processes of broaching, reaming, turning and milling, and combinations of those processes with each other or with drilling.

One of the problems encountered when using two or more drillings to form a passage in a component is that stress concentrations arise at the intersection or transition between one drilling and another when the passage is under internal pressure. In hydraulic applications, for example, the presence of high-pressure fluid within the drillings can generate high stress concentrations which can lead to failure of the component. This problem is particularly acute in fuel injection systems where flow passages in a component such as a pump housing carry highly-pressurised fuel to downstream parts of the system. The stresses arising in common-rail fuel pumps for diesel engines are especially high.

As engine technology develops, there is a requirement to be able to inject fuel at increasingly high pressures as this enables benefits in engine performance in terms of power output, emissions and economy. Yet, the requirement for increasing fuel pressure compounds the problem of stress concentration at the intersection between drillings. Thus, there are ever-increasing demands on the capability and reliability of high-pressure pumps.

An example of a common-rail fuel pump is described in the Applicant's European patent application EP 1489301. Drillings are made in the main pump housing, or in a pump head attached to the main pump housing. Specifically, a first drilling may define a plunger bore for receiving a pumping plunger in use, the arrangement being such that the pumping plunger and the wall of the first drilling define a pump chamber within which fuel is pressurised as a result of plunger motion. Second and third drillings may define flow passages through which, in use, fuel flows to and/or from the pump chamber.

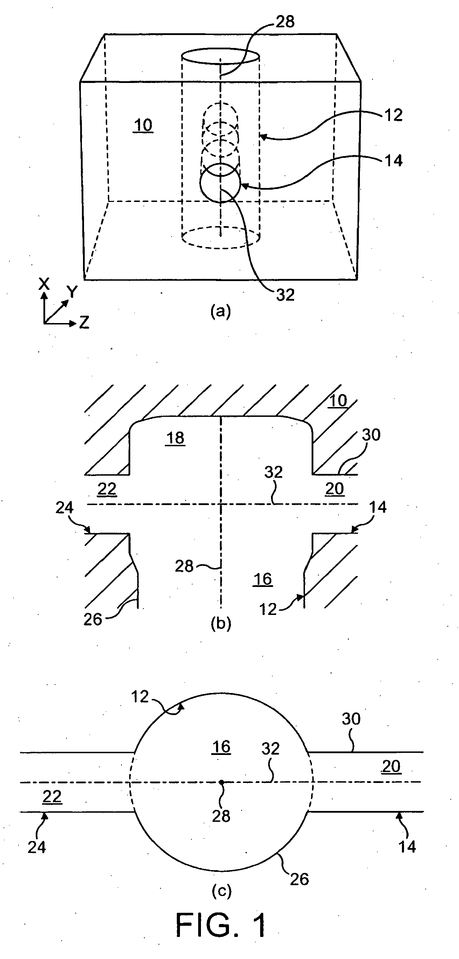

A prior art pump housing will now be described with reference to Figures 1(a), 1(b) and 1(c) of the accompanying drawings. Figure 1(a) is a perspective view that defines X, Y and Z axes. Figure 1(b) is a cross section in the X-Z plane incorporating the longitudinal axis of a first drilling, viewed from the side. Figure 1(c) is a cross section in the Y-Z plane viewed from above, that plane including the common longitudinal axes of second and third drillings transverse to the first drilling.

The component 10 shown schematically in Figures 1 (a), 1(b) and 1(c) is a pump housing for a common rail fuel pump of a compression ignition internal combustion (diesel) engine. Typically, the component 10 may serve as a main pump housing through which a central drive shaft extends to drive the plunger, and any other plungers of the pump, when in use. Alternatively, the component 10 may serve as a hydraulic pump head which is fixed to the main pump housing. An example of a common rail fuel pump of the latter type is described in the Applicant's European patent application EP 1489301 as aforesaid.

The component 10 has first and second drillings 12 and 14 respectively whose axes are co-planar and mutually orthogonal. The first drilling 12 defines a plunger bore 16 to accommodate a pumping plunger (not shown). The plunger bore 16 defines a pump chamber 18 (shown in Figure 1(b)) at one end thereof within which fuel is pressurised as the plunger is driven. The second drilling 14 defines an outlet passage 20 for fuel flowing out of the pump chamber 18 following pressurisation. An inlet passage 22 is also provided in the pump housing 10 through which fuel is supplied at relatively low pressure to the pump chamber 18 for pressurisation. The inlet passage 22 is defined by a third drilling 24 that is aligned with the axis of the second drilling 14 but is opposed to the second drilling 14 about the axis of the first drilling 12. Thus, the axes of the third drilling 24 and the first drilling 12 are also co-planar and mutually orthogonal.

The outlet passage 20 and the inlet passage 22 are of similar diameter, which diameter is generally uniform along their length, whereas the plunger bore 16 is wider than the outlet passage 20 or the inlet passage 22 and narrows slightly below the pump chamber 18 where it accommodates the plunger.

The plunger bore 16 has wall 26 and extends along a first longitudinal axis 28. The outlet passage 20 has wall 30 and extends along a second longitudinal axis 32 orthogonal to, and co-planar with, the first longitudinal axis 28. The second longitudinal axis 32 also extends to become the longitudinal axis of the inlet passage 22. As illustrated in Figure 1(c), the first longitudinal axis 28 extends along the X-axis, and the second longitudinal axis 32 extends along the Y-axis.

This known orientation and positioning of the plunger bore 16 and the outlet and inlet passages 20, 22 with respect to each other results in high stress concentrations under internal pressure in use at the intersections between the drillings 12, 14 and 24 that define those passages. This can result in stress failure of the component 10.

One approach to reducing the stress concentration at the intersection between drillings has been to shape the transition region between the drillings using electrochemical machining (ECM) methods. Advantageously, such shaping involves rounding or 'radiusing' the edge created where one drilling intersects the other.

ECM is based on a controlled anodic electrochemical dissolution of a metal part (the anode) with a pre-shaped tool (the cathode) in an electrolytic process. A direct current of high density and low voltage is passed between the metal part and the tool to dissolve the metal surface into metallic ions by a deplating reaction, with the result that the tool shape is copied into the metal part. An electrolyte is forced to flow through the interelectrode gap with high velocity to intensify the mass/charge transfer near the anode and to remove the dissolution products (in the form of a sludge) generated in the gap.

Conventionally, ECM is carried out before the metal is heat treated. ECM carried out before heat treatment is commonly referred to as 'soft stage' ECM. Following soft stage ECM, the metal is carburised using a heat treatment process to harden the exposed surfaces.

For homogeneous materials, soft stage ECM provides a satisfactory surface finish for high-pressure fluid applications. However, in materials with poor homogeneity, such as pearlitic forged materials, soft stage ECM gives rise to undesirable pitting which itself creates stress concentrations. Furthermore, the carburisation process gives rise to surface imperfections having a 'crocodile skin' appearance, leaving poorly-attached metal grains at the exposed surface. These surface imperfections can lead to component failure, particularly in high-pressure fluid applications. This problem has been particularly recognised during tests carried out by the Applicant on high-pressure common-rail fuel pumps for diesel engines.

An entirely different approach to reducing the stress concentration at the intersection between drillings is slightly to offset one of the drillings relative to the other drilling so that their axes are no longer co-planar. Such arrangements are described in, for example, US Patent No. 6 588 405 and International Patent Application Publication No. WO 03/083285. However, producing offset drillings can be problematic as the tool forming the second drilling, being offset from the axis of the first drilling, is only partially supported as it breaks through into the first drilling. This can lead to burrs, poor surface finish, excessive tool wear and tool breakage. The greater the degree of offset between drillings, the more serious these problems become. Also, offsetting the drillings creates dead volume, which is of course undesirable in the case of a pump, and the larger the offset, the bigger the dead volume. All of these factors lead to a prejudice in the art against offset drillings.

It is an object of the present invention to provide components such as metal housings for high-pressure fluid applications, and methods of manufacturing such components, which alleviate the aforementioned limitations of known components and methods of their manufacture.

### Summary of the invention

According to the invention, there is provided a method of manufacturing a component for high-pressure fluid applications, the method comprising making a first drilling in a workpiece along a first longitudinal axis that lies in a first plane; making a second drilling in the workpiece along a second longitudinal axis that lies in a second plane, the second drilling being positioned with respect to the first drilling such that the first and second planes are spaced apart by a distance of at least the radius of the first drilling minus the radius of the second drilling; effecting fluid communication between the drillings by intersection between the drillings as the second drilling is made to create a fluid flow passage in the component; heat treating a wall of at least one of the first and second drillings before or after effecting fluid communication between the drillings; and shaping the fluid flow passage by electrochemical machining after heat treating a wall of at least one of the first and second drillings.

The method preferably further comprises enlarging an opening between the drillings created by said intersection.

Preferably, the method further comprises shaping edges of the drillings created by said intersection. Advantageously, said shaping reduces stress concentration at those edges in use of the component. Said shaping may be effected by electrochemical machining.

Electrochemical machining may enlarge the opening between the drillings created by said intersection.

Hard stage electrochemical machining is preceded by heat treatment of a wall of at least one drilling. Alternatively, soft stage electrochemical machining precedes heat treatment of a wall of at least one drilling. In either case, said heat treatment is carburising.

The invention finds particular benefit when employed in the manufacture of a high-pressure fuel pump for a fuel injection system. The component may therefore take the form of a housing for an internal combustion engine, wherein the first drilling defines a pump chamber and a bore for receiving a pump plunger, and the second drilling defines a flow passage for fuel flowing into or out of the pump chamber.

### Brief description of the drawings

Reference has already been made to Figures 1(a), (b) and (c) of the drawings which illustrate a pump housing component of the prior art having first, second and third drillings intersecting in a known manner, Figure 1(a) being a perspective view that defines X, Y and Z axes, Figure 1(b) being a cross section in the X-Z plane incorporating the longitudinal axis of a first drilling, viewed from the side, and Figure 1(c) being a cross section in the Y-Z plane viewed from above, that plane including the common longitudinal axes of second and third drillings transverse to the first drilling.

Components manufactured by the method of the invention will now be described, by way of example only, with reference to the accompanying drawings in which:

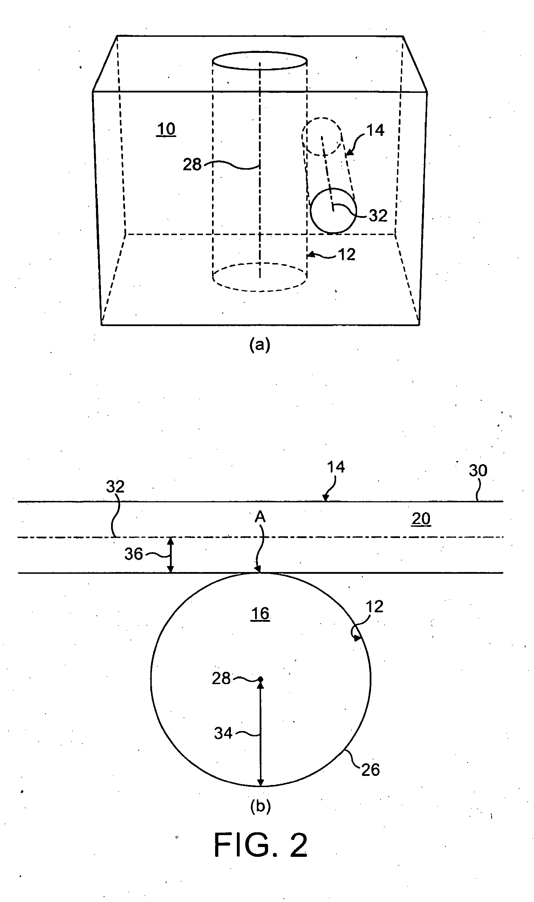

Figures 2(a) and 2(b) illustrate a partially-manufactured component in a first embodiment of the present invention, Figure 2(a) being a perspective view and Figure 2(b) being a cross section in the Y-Z plane viewed from above, that plane including the longitudinal axis of a second drilling transverse to a first drilling;

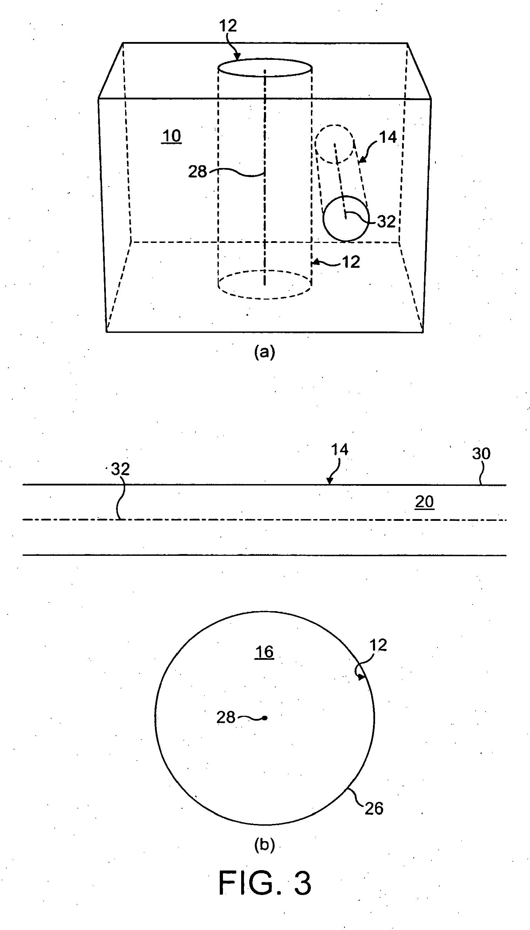

Figures 3(a) and 3(b) illustrate another partially-manufactured component useful for understanding the present invention, Figure 3(a) being a perspective view and Figure 3(b) being a cross section in the Y-Z plane viewed from above, that plane including the longitudinal axis of a second drilling transverse to a first drilling;

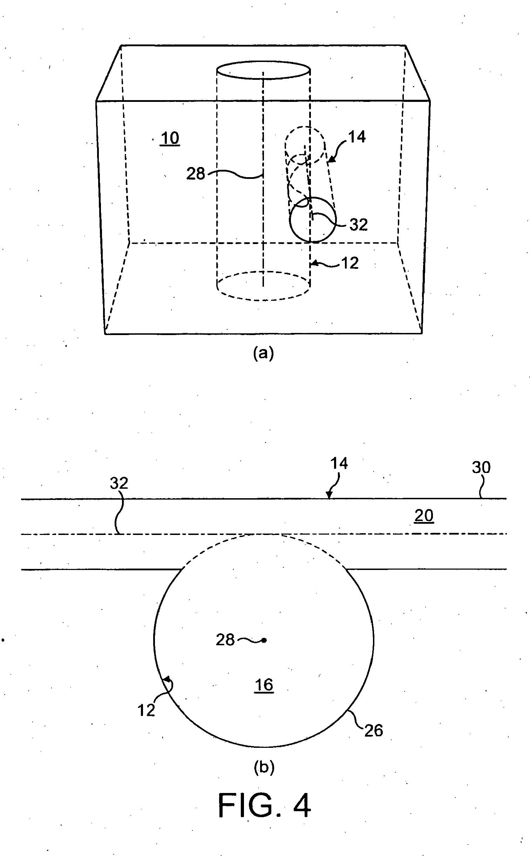

Figures 4(a) and 4(b) illustrate a partially-manufactured component in a second embodiment of the present invention, Figure 4(a) being a perspective view and Figure 4(b) being a cross section in the Y-Z plane viewed from above, that plane including the longitudinal axis of a second drilling transverse to a first drilling.

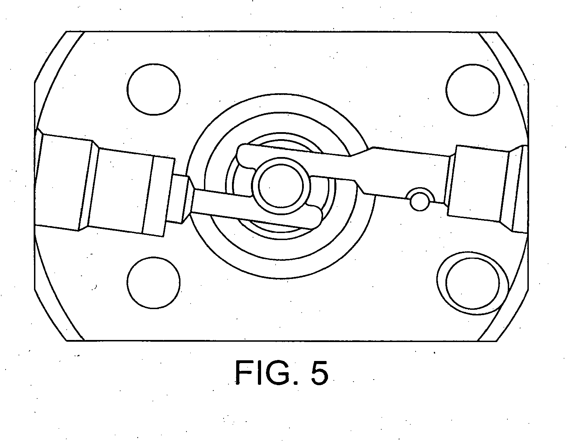

Figure 5 is a 3D representation of a component made in accordance with the second embodiment of the invention;

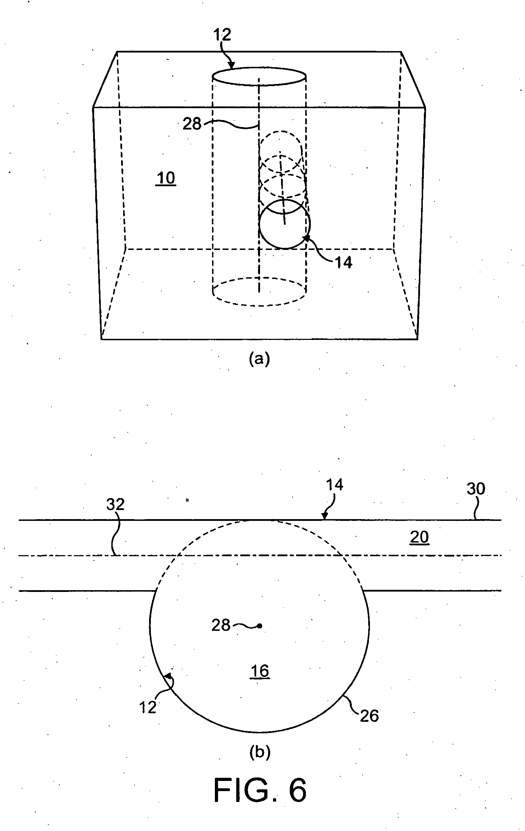

Figures 6(a) and 6(b) illustrate a partially-manufactured component in a third embodiment of the present invention, Figure 6(a) being a perspective view and Figure 6(b) being a cross section in the Y-Z plane viewed from above, that plane including the longitudinal axis of a second drilling transverse to a first drilling; and

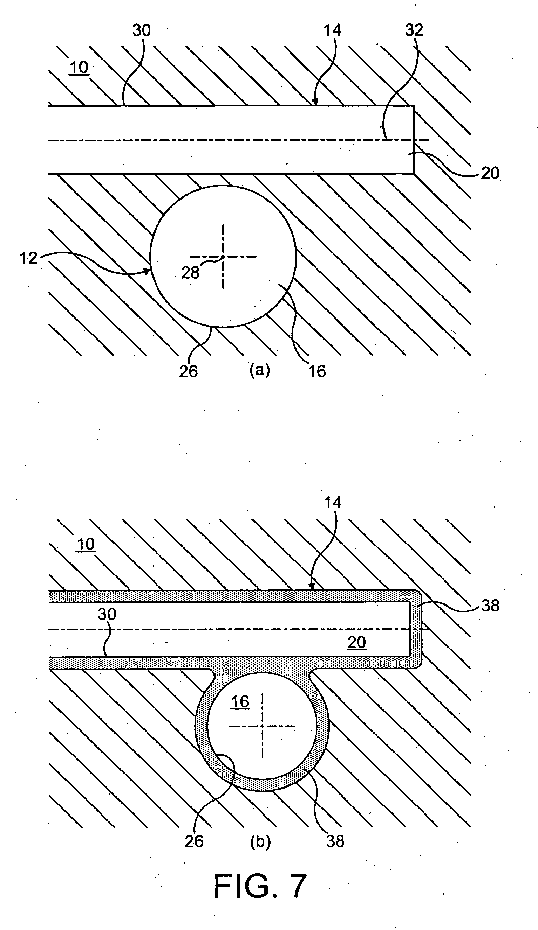

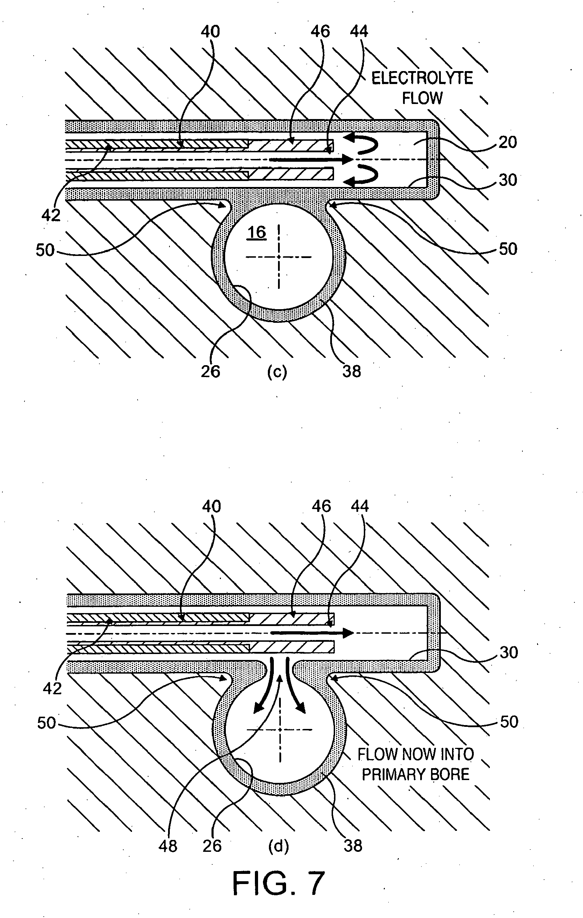

Figures 7(a) to 7(d) are cross-sectional views corresponding to Figure 3(b) that illustrate successive further manufacturing steps undergone by the component shown in Figure 3, included to aid understanding of the present invention.

### Detailed description of the preferred embodiments of the invention

The present invention may be applied to the positioning of the outlet passage 20 or the inlet passage 22 with respect to the plunger bore 16, and preferably to the positioning of both the outlet passage 20 and the inlet passage 22 with respect to the plunger bore 16. However, for brevity and to improve the clarity of the following description, only the relationship of the outlet passage 20 with respect to the plunger bore 16 will be described in detail. Accordingly, the inlet passage 22 has been omitted from Figures 2 to 7 of the drawings although it is shown in the actual component represented in Figure 5. References to the outlet passage 20 in this description may be taken to apply also to the inlet passage 22 unless the context demands otherwise.

The Inventor has had an insight that substantially and advantageously lowers stress concentrations at the region between the outlet passage 20 and the plunger bore 16. The various embodiments of the invention to be described herein arise from that insight, which is to offset the longitudinal axis 32 of the outlet passage 20 in the z-direction with respect to the longitudinal axis 28 of the plunger bore 16, to an extent substantially greater than is taught in the prior art.

Figures 2(a) and 2(b) show a first embodiment of a component 10 manufactured according to an expression of the present invention where the longitudinal axis 28 of the plunger bore 16 and the longitudinal axis 32 of the outlet passage 20 are transverse to each other (one is parallel with the Y axis and the other is parallel with the Z axis) and are not co-planar but instead lie in mutually spaced parallel planes. In this embodiment of the invention, the offset of the outlet passage 20 from the plunger bore 16 is such that the inner side of the wall 30 of the outlet passage 20, that closest to the longitudinal axis 28 of the plunger bore 16, lies at or beyond the wall 26 of the plunger bore 16. As illustrated, the inner side of the wall 30 is tangential to the wall 26 of the plunger bore 16 so that the walls 26, 30 meet at an infinitely small point, indicated at A. The longitudinal axis 32 of the outlet passage 30 therefore lies outside the radius of the plunger bore 16 by a distance equal to the radius of the outlet passage. Put another way, the axes 28, 32 of the plunger bore 16 and the outlet passage 20 are spaced apart (in the z-direction) by at least the radius 34 of the plunger bore 16 (that being the distance between the wall 26 and the longitudinal axis 28) plus the radius 36 of the outlet passage 20 (the distance between the wall 30 and the longitudinal axis 32). At point A, there is a small hole through the walls 26, 30 through which the plunger bore 16 can communicate with the outlet passage 20. The hole at point A may be created, shaped or enlarged by a method to be described later with reference to Figures 7(a) to 7(d), and which also forms an optional part of the present invention.

A second component is shown in Figures 3(a) and 3(b), in which a component 10 comprises a plunger bore 16 and outlet passage 20 formed, unconventionally, as two discrete, non-intersecting drillings. Stress reductions between the two drillings are minimised. A hole (not shown in Figures 3(a) and 3(b) but shown in Figures 7(a) to 7(d)) is then created between those drillings at their closest approach so that the plunger bore 16 can communicate with the outlet passage 20. The method of making this embodiment is useful for understanding the present invention to be described later, with reference to Figures 7(a) to 7(d).

In a second embodiment shown in Figures 4(a), 4(b) and 5 of the drawings, the axis 32 of the outlet passage 20 is offset in the z-direction with respect to the axis 28 of the plunger bore 16 to a lesser extent than in the embodiment shown in Figures 2(a) and 2(b). However, the degree of offset also has the unexpected effect of reducing stress concentrations at the region of intersection between the two drillings 12, 14. The third embodiment of Figures 4(a), 4(b) and 5 differs from that of Figures 2(a) and 2(b) in that the longitudinal axis 32 of the outlet passage 20 is, at one point, tangential to the wall 26 of the plunger bore 16. In this embodiment, the distance between the longitudinal axes 28, 32 of the plunger bore 16 and the outlet passage 20 is equal to or greater than the radius 34 of the plunger bore 16.

A third embodiment, shown in Figures 6(a) and 6(b), differs from the second embodiment shown in Figures 4(a), 4(b) and 5 in that the longitudinal axis 32 of the outlet passage 20 is still closer to the longitudinal axis 28 of the plunger bore 16. There is therefore a lesser degree of offset between the axes 28, 32 than in the previous embodiments but the offset is still surprisingly greater than is suggested by the prior art. In this embodiment, the outlet passage 20 and the plunger bore 16 intersect such that the outer side of the wall 30 of the outlet passage 20 furthest from the longitudinal axis 28 of the plunger bore 16 is tangential to the wall 26 of the plunger bore 16. In this embodiment, the axes 28, 32 of the plunger bore 16 and the outlet passage 20 are spaced apart by a distance of at least the radius of the plunger bore 16 less the radius of the outlet passage 20.

It will be appreciated that the present invention includes all relative positions of the plunger bore 16 and the outlet passage 20 lying between the two most extreme positions illustrated in, and described with reference to, Figures 2(a) and 2(b) on the one hand and Figures 6(a) and 6(b) on the other hand. Thus, in a broad expression, the present invention includes all relative positions of the plunger bore 16 and the outlet passage 20 wherein the longitudinal axes 28, 32 of the plunger bore 16 and the outlet passage 20 are spaced apart by at least the radius 34 of the plunger bore 16 minus the radius 36 of the outlet passage 20, wherein the plunger bore 16 and outlet passage 20 intersect.

The plunger bore 16 and the outlet passage 20 of the embodiments shown in Figures 2(a) to 6(b) can be formed by any conventional method such as by drilling or by any other machining, erosion or material removal method using a machining tool or otherwise, and can be of any diameter suitable for the intended purpose.

In the components shown in Figures 2 and 3, it will be appreciated that a machining tool forming the outlet passage 20 will not break into the plunger bore 16 to any material extent, or even at all, and vice versa. This avoids machining burrs at the interface between the outlet passage 20 and the plunger bore 16. Moreover, as the tools forming the plunger bore 16 and the outlet passage 20 are supported along their length throughout the machining process, the surface finish of the plunger bore 16 and the outlet passage 20 is improved and tool wear and tool failures are reduced. Also, drillings creating the outlet passage 20 and the plunger bore 16 can be formed simultaneously, which results in faster production and hence reduces cost.

As the arrangements shown in Figures 2 and 3 do not inherently provide for adequate communication between the plunger bore 16 and the outlet passage 20, a hole is created or enlarged using the method illustrated in Figures 7(a) to 7(d). It will be appreciated that this method can be applied to all embodiments of the invention to enlarge the hole between the plunger bore 16 and the outlet passage 20 and to shape that opening, for example by radiusing the edge at the intersection between the plunger bore 16 and the outlet passage 20.

As an initial step illustrated in Figure 7(a), drillings corresponding to the plunger bore 16 and the outlet passage 20 are formed in a steel component 10 by a known method.

The walls 26, 30 of the drillings are then case-hardened in a carbon-rich atmosphere by a conventional carburisation process as shown in Figure 7(b). The carburisation process preferably results in the walls 26, 30 of both the plunger bore 16 and the outlet passage 20 being hardened. In practice, through masking techniques, it may be possible to carburise the internal surface of only one of the plunger bore 16 and the outlet passage 20, although this is less desirable.

Carburisation is achieved by heating the component 10 in a carbon-rich atmosphere, such as carbon dioxide, methane, propane or acetylene, so that the carbon potential causes adsorption of carbon into the exposed surface of the metal, thereby making that surface harder. Thus, the walls 26, 30 of the plunger bore 16 and the outlet passage 20 are hardened by a carburised layer 38. Typically, the carburisation process results in a hardened layer having a thickness of around 1 mm.

Referring now to Figure 7(c), an ECM process is applied to the walls 26, 30 of one or both of the plunger bore 16 or the outlet passage 20. Again, for clarity, the ECM process is illustrated as being applied only to the wall 30 of the outlet passage 20. ECM performed after heat treatment (i.e. post-carburisation) may be referred to as a 'hard stage' ECM process and is achieved by a tool including an ECM electrode 40 that extends coaxially within the outlet passage 20. The electrode 40 is tubular and is shrouded by an insulating sleeve identified at 42 that extends almost to the free distal end 44 of the electrode 40 but leaves a distal end portion of the electrode 40 exposed to define an active region 46. The active region 46, being the region of the tooling apparatus that has an active machining effect, has rotational symmetry about its primary axis aligned with the longitudinal axis 32 of the passage 20. In general, it may be convenient to provide the hard stage electrode 40 with an insulation means, for example an insulating shield, sleeve or mask, so that only a part of the region of intersection is machined during the electrochemical machining process.

The tubular shape of the electrode 40 provides for an electrolyte (e.g. sodium nitrate solution) to be pumped through the interior of the electrode to emerge from its open distal end 44, whereupon the electrolyte flows back out of the outlet passage 20 around the electrode 40 to flush and carry away the products of dissolution.

When a voltage is applied to the electrode 40 to generate a high current density in the electrolyte at the wall 30 of the outlet passage 20, the metal between the outlet passage 20 and the plunger bore 16 is dissolved to create a hole 48. Once the ECM process has created the hole 48, the electrolyte flows into the plunger bore 16 and has the effect of radiussing the edge at the intersection 50 between the outlet passage 20 and the plunger bore 16. Finally, the finished pump housing 10 is cleaned to remove the electrolyte.

It is of course possible instead to employ a conventional soft stage ECM process to erode a hole 48 between the outlet passage 20 and the plunger bore 16 and to radius the edge at that intersection, further to reduce stress concentration. However, if the metal is carburised first through heat treatment and is then machined using hard stage ECM, there is a noticeable improvement in the finish of the machined surface. Pitting is reduced or substantially eliminated and, thus, stress concentrations under high pressure are reduced.

For hydraulic pump applications in common rail fuel systems, where the pressure of fuel in the pump is particularly high, the invention is found to have particular benefits as the improvement in surface finish has the effect of reducing stress concentrations in the region of intersection between the passages. Furthermore, because the metal part is carburised before the ECM process is applied, the electrochemical machining time is much reduced compared to soft stage ECM processes. This provides a further benefit for the manufacturing process of the invention.

By applying a hard stage ECM process to the passage following an initial drilling process (or other initial process by which the passage is formed), and optionally an initial soft stage ECM process, the region between the passages is eroded to create a hole, the walls defining the hole being polished effectively so that stress concentrations are reduced.

Alternatively, in another embodiment, the hard stage ECM process includes machining the internal surface of the second passage by means of a hard stage electrode shaped to machine a radiussed edge at the opening into the first passage.

For the embodiments shown in Figures 4 and 5, the outlet passage 20 is formed before the formation of the plunger bore 16, or vice versa. The other of the plunger bore 16 or the outlet passage 20 is then formed by drilling and this drilling is turned to size. Any burrs at the intersection of the plunger bore 16 and the outlet passage 20 are removed by one or a combination of conventional methods such as electrochemical machining (ECM), reaming and brushing processes.

The present invention may be embodied in other specific forms without departing from its essential attributes as defined in the appended claims and other statements of invention herein. For example, the longitudinal axes of the outlet passage 20 and the plunger bore 16 need not be transverse to one another. Furthermore, a third drilling may be provided (such as an inlet passage) which is formed, according to the invention, to be in fluid communication with the plunger bore 16. In this case, a longitudinal axis of the third drilling can be transverse, or at any angle relative to, the plane of the longitudinal axis of the plunger bore 16. Similarly, the longitudinal axis of the third drilling can be parallel, or orientated at any angle relative to, the plane of the longitudinal axis of the outlet passage 20.

Although the various aspects of the invention have been described in terms of a high pressure fuel pump, it will he appreciated that the invention is equally applicable to other parts of a fuel injection system where there is a requirement to transport high pressure fuel. For example, the invention may be applied to the intersections between passages in a fuel injector, or in other passages of a common-rail fuel supply system. In a fuel injector, for example, the passages are typically formed by laser machining, and not by drilling. The laser machined passages can then be formed and or finished using the various embodiments of the invention described previously.

Moreover, the invention in its broadest sense is not limited to use in fuel injection systems but is also suitable for metal parts for other applications, whether hydraulic applications or otherwise. The passages formed in the parts may be formed using conventional drilling techniques, contact CNC milling, stationary EDM (electrodischarge machining), moving EDM or laser machining techniques, and references to 'drillings' shall be taken to include passages that are formed by any of these or similar means. In addition, reference to ECM processing shall be taken to include stationary ECM and moving ECM, where the electrode is moved relative to the workpiece.

## Claims

1. A method of manufacturing a component for high-pressure fluid applications, the method comprising:
making a first drilling (12) in a workpiece (10) along a first longitudinal axis (28) that lies in a first plane;
making a second drilling (14) in the workpiece (10) along a second longitudinal axis (32) that lies in a second plane spaced from and parallel to the first plane, the second drilling (14) being positioned with respect to the first drilling (12) such that the first and second planes are spaced apart by a distance of at least the radius (34) of the first drilling (12) minus the radius (36) of the second drilling (14);
effecting fluid communication between the drillings by intersection between the drillings as the second drilling (14) is made to create a fluid flow passage in the component;
heat treating a wall of at least one of the first and second drillings before or after effecting fluid communication between the drillings; and
shaping the fluid flow passage by electrochemical machining after heat treating a wall of at least one of the first and second drillings.

2. The method of Claim 1, wherein the step of shaping the fluid flow passage by electrochemical machining comprises enlarging an opening between the drillings created by said intersection.

3. The method of Claim 1 or Claim 2, wherein said shaping reduces stress concentration in use of the component at edges of the drillings created by effecting fluid communication between the drillings.

4. The method of any preceding Claim, employing an electrochemical machining electrode that is masked to define an active region at the location at which fluid communication between the drillings is effected.

5. The method of any preceding Claim, wherein soft stage electrochemical machining precedes the heat treatment of a wall of at least one drilling.

6. The method of any preceding Claim, wherein said heat treatment comprises carburising.

7. The method of any preceding Claim when applied to a fuel injection system component.

8. A component as manufactured in accordance with the method of any preceding Claim and being a housing of a high-pressure fuel pump for an internal combustion engine, wherein the first drilling defines a pump chamber and a bore for receiving a pump plunger, and the second drilling defines a flow passage for fuel flowing into or out of the pump chamber.

9. A pump comprising a component as defined in Claim 8 or as manufactured in accordance with the method of any of Claims 1 to 7.

10. A fuel injection system including a component as defined in Claim 8 or as manufactured in accordance with the method of any of Claims 1 to 7, or including a pump as defined in Claim 9.

## Patentansprüche

1. Verfahren zum Herstellen eines Bauteils für Hochdruckfluidanwendungen, das Verfahren umfassend:
Anfertigen eines ersten Bohrlochs (12) in einem Werkstück (10) entlang einer ersten Längsachse (28), die in einer ersten Ebene liegt,
Anfertigen eines zweiten Bohrlochs (14) in dem Werkstück (10) entlang einer zweiten Längsachse (32), die in einer zweiten, von bzw. zu der genannten ersten Ebene beabstandeten und parallelen Ebene liegt, wobei das zweite Bohrloch (14) in Bezug auf das erste Bohrloch (12) positioniert ist, so dass die erste und die zweite Ebene um einen Abstand von wenigstens dem Radius (34) des ersten Bohrlochs (12) minus dem Radius (36) des zweiten Bohrlochs (14) voneinander beabstandet sind,
Bewirken der Strömungsverbindung zwischen den Bohrlöchern durch Verschneidung zwischen den Bohrlöchern bei der Anfertigung des zweiten Bohrlochs (14) zur Erzeugung eines Fluidströmungskanals in dem Bauteil,
Wärmebehandeln der Wand des ersten und/oder des zweiten Bohrlochs vor oder nach dem Bewirken der Strömungsverbindung zwischen den Bohrlöchern und
Gestalten des Fluidströmungskanals durch elektrochemische Bearbeitung nach dem Wärmebehandeln einer Wand des ersten und/oder zweiten Bohrlochs.

2. Verfahren nach Anspruch 1, wobei der Schritt des Gestaltens des Fluidströmungskanals durch elektrochemische Bearbeitung das Vergrößern einer durch die genannte Verschneidung geschaffenen Öffnung zwischen den Bohrlöchern aufweist.

3. Verfahren nach Anspruch 1 oder Anspruch 2, wobei das genannte Gestalten die Spannungskonzentration im Gebrauch des Bauteils an Rändern der Bohrlöcher reduziert, die durch Bewirken der Strömungsverbindung zwischen den Bohrlöchern entsteht.

4. Verfahren nach einem der vorhergehenden Ansprüche, das eine elektrochemische Bearbeitungselektrode einsetzt, die maskiert ist, um eine aktive Region an der Stelle zu definieren, an welcher die Strömungsverbindung zwischen den Bohrlöchern bewirkt wird.

5. Verfahren nach einem der vorhergehenden Ansprüche, wobei die elektrochemische Bearbeitung in der weichen Phase der Wärmebehandlung einer Wand von wenigstens einem Bohrloch vorangeht.

6. Verfahren nach einem der vorhergehenden Ansprüche, wobei die genannte Wärmebehandlung Aufkohlen umfasst.

7. Verfahren nach einem der vorhergehenden Ansprüche, wenn auf ein Bauteil eines Brennstoffeinspritzsystems angewendet.

8. Bauteil, das gemäß dem Verfahren nach einem der vorhergehenden Ansprüche hergestellt und ein Gehäuse einer Hochdruckkraftstoffpumpe für eine Verbrennungskraftmaschine ist, wobei das erste Bohrloch eine Pumpenkammer und eine Bohrung zum Aufnehmen eines Pumpenkolbens definiert und das zweite Bohrloch einen Strömungskanal für in die oder aus der Pumpenkammer strömenden Kraftstoff definiert.

9. Pumpe, umfassend ein Bauteil, wie es in Anspruch 8 definiert wird oder gemäß dem Verfahren nach einem der Ansprüche 1 bis 7 hergestellt wird.

10. Kraftstoffeinspritzsystem mit einem Bauteil, wie es in Anspruch 8 definiert wird oder gemäß dem Verfahren nach einem der Ansprüche 1 bis 7 hergestellt wird, oder mit einer Pumpe, wie sie in Anspruch 9 definiert wird.

## Revendications

1. Procédé pour fabriquer un composant destiné à des applications avec fluide sous haute pression, le procédé comprenant les étapes consistant à :
pratiquer un premier perçage (12) dans une pièce à oeuvrer (10) le long d'un premier axe longitudinal (28) qui est situé dans un premier plan ;
pratiquer un second perçage (14) dans la pièce à oeuvrer (10) le long d'un second axe longitudinal (32) qui est situé dans un second plan espacé du premier plan et parallèle à celui-ci, le second perçage (14) étant positionné par rapport au premier perçage (12) de telle façon que le premier plan et le second plan sont espacés d'une distance au moins égale au rayon (34) du premier perçage (12) moins le rayon (36) du second perçage (14) ;
effectuer une communication fluidique entre les perçages au moyen d'une intersection entre les perçages lorsque l'on pratique le second perçage (14) pour créer un passage d'écoulement de fluide dans le composant ;
traiter à chaud une paroi de l'un au moins du premier et du second perçage avant ou après avoir effectué la communication fluidique entre les perçages ; et
mettre en forme le passage d'écoulement de fluide par usinage électrochimique après traitement à chaud d'une paroi de l'un au moins du premier et du second perçage.

2. Procédé selon la revendication 1, dans lequel l'étape de mise en forme du passage d'écoulement de fluide par usinage électrochimique comprend d'élargir une ouverture entre les perçages créée par ladite intersection.

3. Procédé selon la revendication 1 ou 2, dans lequel ladite mise en forme réduit la concentration de contraintes en utilisation du composant au niveau des bordures des perçages créés en effectuant la communication fluidique entre les perçages.

4. Procédé selon l'une quelconque des revendications précédentes, dans lequel on emploie une électrode d'usinage électrochimique qui est masquée pour définir une région active à l'emplacement auquel on effectue la communication fluidique entre les perçages.

5. Procédé selon l'une quelconque des revendications précédentes, dans lequel un stade en douceur d'un usinage électrochimique précède le traitement à chaud d'une paroi d'au moins un perçage.

6. Procédé selon l'une quelconque des revendications précédentes, dans lequel ledit traitement à chaud comprend une carburation.

7. Procédé selon l'une quelconque des revendications précédentes, appliquée à un composant d'un système d'injection de carburant.

8. Composant fabriqué en accord avec le procédé selon l'une quelconque des revendications précédentes, qui est un boîtier d'une pompe à carburant à haute pression pour un moteur à combustion interne, dans lequel le premier perçage définit une chambre de pompe et un trou pour recevoir un plongeur de pompe, et le second perçage définit un passage d'écoulement pour le carburant qui s'écoule en entrant ou en sortant de la chambre de pompe.

9. Pompe comprenant un composant tel que défini dans la revendication 8, ou fabriqué en accord avec le procédé selon l'une quelconque des revendications 1 à 7.

10. Système d'injection de carburant incluant un composant tel que défini dans la revendication 8, ou tel que fabriqué en accord avec le procédé de l'une quelconque des revendications 1 à 7, ou incluant une pompe telle que définie dans la revendication 9.
